# EUROPÄISCHE PATENTSCHRIFT

(11) **EP 2 738 527 B1**
(45) Veröffentlichungstag und Bekanntmachung des Hinweises auf die Patenterteilung: **10.04.2019**
(21) Anmeldenummer: 14157276.8
(22) Anmeldetag: 25.09.2012
(51) Int. Cl.: G01F 23/284

(54) **Koaxialsonde mit Abschlusswiderstand**
Coaxial probe with terminating resistance
Sonde coaxiale avec résistance terminale

(43) Veröffentlichungstag der Anmeldung: 04.06.2014
(62) Teilanmeldung aus: 12185873.2
(73) Patentinhaber: VEGA Grieshaber KG, 77709 Wolfach (DE)
(72) Erfinder: Dietmeier, Jürgen, 77756 Hausach (DE); Kienzle, Klaus, 77736 Zell am Harmersbach (DE)
(74) Vertreter: Maiwald Patent- und Rechtsanwaltsgesellschaft mbH

(56) Entgegenhaltungen:
- EP-A1- 2 154 495
- EP-A2- 0 780 664
- EP-A2- 1 186 869
- EP-A2- 1 965 181
- WO-A1-02/42793
- WO-A1-2010/049297
- DE-A1- 1 573 033
- DE-A1- 10 101 714
- DE-A1-102004 032 965
- DE-A1-102006 053 399
- US-A- 3 874 237
- US-A- 4 544 880
- US-A- 5 943 908
- US-A1- 2002 121 907
- US-A1- 2002 186 025

## Beschreibung

### Gebiet der Erfindung

Die vorliegende Erfindung betrifft die Füllstandmessung. Insbesondere betrifft die vorliegende Erfindung eine Koaxialsonde für ein Zeitbereichsreflektometrie-Füllstandmessgerät sowie ein Zeitbereichsreflektometrie-Füllstandmessgerät mit einer solchen Koaxialsonde.

### Technischer Hintergrund

Die Zeitbereichsreflektometrie, auch bekannt unter der englischen Bezeichnung Time Domain Reflectometry, kurz TDR, ist ein Verfahren zur Ermittlung und Analyse von Lauflängen und Reflexionscharakteristika von elektromagnetischen Wellen und Signalen.

Bei einem auf TDR basierenden Füllstandmessgerät wird von der Elektronik des Sensors ein niedrigenergetischer elektromagnetischer Impuls erzeugt, in einen Leiter (auch Sonde genannt) eingekoppelt und entlang dieser Sonde geführt. Bei der Sonde handelt es sich in der Regel um einen koaxialen Wellenleiter, einen Metallstab oder ein Stahlseil.

Trifft dieser Mikrowellen-Impuls nun auf die Oberfläche des zu messenden Mediums, so wird ein Teil des Impulses dort reflektiert und läuft an der Sonde entlang wieder zur Elektronik zurück, welche dann aus der Zeitdifferenz zwischen dem ausgesandten und dem empfangenen Impuls (im Nanosekunden-Bereich) den Füllstand errechnet.

Der Sensor kann den ausgewerteten Füllstand als kontinuierliches Analogsignal oder Schaltsignal ausgeben. Ein Vorteil dieser Methode ist, dass das Messergebnis kaum durch die Eigenschaften des zu messenden Mediums, wie etwa Dichte, Leitfähigkeit und Dielektrizitätskonstante, oder durch die Umgebungsbedingungen, wie etwa Druck und Temperatur, beeinflusst wird, und dass keine störanfälligen bewegten Teile benötigt werden.

Die Sonde des TDR-Sensors sorgt dafür, dass das Signal ungestört bis zum Füllgut gelangt. Mit diesem Messverfahren werden Flüssigkeiten, Schüttgüter und Trennschichten in Flüssigkeiten vermessen.

Nicht zuletzt aus geometrischen Gründen kann allerdings die Messgenauigkeit des Füllstandmessgeräts im Bereich des Sondenendes, welches dem Füllgut zugewandt ist, beeinträchtigt sein.

EP 1 186 869 A1 zeigt eine Füllstandsmessvorrichtung mit einer Sende- und Empfangseinrichtung und einem mit einem Ende an die Sende- und Empfangseinrichtung gekoppelten Wellenleiter. Ein anderes Ende des Wellenleiters ist zum Eintauchen in ein Füllgut vorgesehen.

### Zusammenfassung der Erfindung

Es ist eine Aufgabe der Erfindung, die Messgenauigkeit eines Zeitbereichsreflektometrie-Füllstandmessgeräts zu erhöhen.

Diese Aufgabe wird durch die Gegenstände der unabhängigen Patentansprüche gelöst. Weiterbildungen der Erfindung ergeben sich aus den Unteransprüchen.

Gemäß einem ersten Aspekt der Erfindung ist eine Koaxialsonde für ein Zeitbereichsreflektometrie-Füllstandmessgerät angegeben. Die Sonde weist einen Innenleiter und einen Außenleiter auf. Darüber hinaus ist ein Abschlusswiderstand vorgesehen, der in den Innenleiter integriert ist und Innen- und Außenleiter elektrisch miteinander verbindet. Der Abschlusswiderstand befindet sich an einem unteren Ende des Innenleiters.

Der Abschlusswiderstand weist beispielsweise einen elektrischen Widerstand von 50 Ohm auf und ermöglicht es, dass ein Messen des Füllstandes bis zum Sondenende mit höherer Genauigkeit erfolgen kann, oder überhaupt erst möglich ist.

Der Abschlusswiderstand ist in den Innenleiter der Koaxialsonde eingebaut und kann gegenüber der Messumgebung komplett abgedichtet sein.

Hierfür weist die Koaxialsonde gemäß einer Ausführungsform der Erfindung eine Abdichtungsvorrichtung auf, welche den Fluidaustausch zwischen der Messumgebung der Sonde und dem Abschlusswiderstand verhindern soll.

Die Abdichtungsvorrichtung weist beispielsweise einen Grundkörper auf, in den der Abschlusswiderstand eingebettet ist und der sich in einer Aussparung in einem dem zu vermessenden Füllgut zuzuwendenden Ende des Innenleiters befindet.

Hier und im Folgenden sei unter dem "Ende" des Innenleiters und dem "Ende" der Koaxialsonde das "untere" Ende des Innenleiters bzw. des Außenleiters bzw. der Koaxialsonde zu verstehen. Dieses untere Ende ist dasjenige Ende, welches, wenn das Füllstandmessgerät im Behälter eingebaut ist, in Richtung Füllgut weist bzw. sich unterhalb der Füllgutoberfläche befindet. Im Regelfall weist die Sonde nach unten, so dass es sich also bei diesem Ende um das "untere" Ende der Sonde handelt.

Gemäß einer weiteren Ausführungsform der Erfindung weist die Abdichtungsvorrichtung einen Dichtring auf, der zumindest teilweise in den Grundkörper eingebettet ist und welcher der Abdichtung zwischen dem Grundkörper und dem Innenleiter dient. Der Grundkörper der Abdichtungsvorrichtung weist hierfür beispielsweise eine umlaufende Nut auf, in welche der Dichtring (beispielsweise in Form eines O-Ringes) eingepresst werden kann.

Die Abdichtungsvorrichtung und insbesondere der Grundkörper kann auch aus spritzfähigem Kunststoff bestehen bzw. einen solchen aufweisen. Insbesondere kann der Abschlusswiderstand nach dessen Anbringung im Innenleiter mit dem spritzfähigen Kunststoff umspritzt werden. In diesem Falle ist das Vorsehen eines zusätzlichen Dichtrings nicht erforderlich.

Bei dem spritzgussfähigen Kunststoff handelt es sich beispielsweise um ein Perfluoralkoxy-Polymer (PFA).

Erfindungsgemäß weist die Koaxialsonde ein Federelement auf, das zwischen dem Abschlusswiderstand und dem Innenleiter angeordnet ist und den Abschlusswiderstand mit dem Innenleiter elektrisch verbindet.

Die Kontaktierung kann auch anderweitig erfolgen. Beispielsweise kann der Anschlussdraht eines Drahtwiderstandes in einem weiteren dünnen Loch geklemmt oder verpresst werden. Auch kann die Kontaktierung nur mit einem Harz oder einer leitfähigen Flüssigkeit ohne Federelement oder einem leitfähigen Kleber erfolgen. Das Federelement ist beispielsweise vor der Installation des Abschlusswiderstandes fest am Widerstand angebracht worden und wird dann bei der Installation zusammen mit dem Widerstand in den Innenleiter eingeschoben, bis das Federelement an den Innenleiter anstößt und etwas zusammengedrückt wird. Daraufhin wird der Abschlusswiderstand im Innenleiter fixiert, so dass er sich nicht mehr bewegen kann und das Federelement unter Spannung bleibt.

Das dem Abschlusswiderstand abgewandte Ende des Federelements kann durch die Federkraft gegen den Innenleiter gedrückt werden. Diese Druckkraft kann ausreichend sein, um den elektrischen Kontakt zwischen Federelement und Innenleiter herzustellen. Es ist beispielsweise möglich, dass zwischen dem Abschlusswiderstand und der Fläche des Innenleiters, welche den Boden der Aussparung im Innenleiter ausbildet, in welche der Abschlusswiderstand integriert ist, eine leitfähige Flüssigkeit oder ein leitfähiges Harz eingefüllt ist, so dass der elektrische Kontakt zwischen dem Federelement und dem Innenleiter auf einfache und zuverlässige Weise sichergestellt werden kann.

Nach Einschieben des Abschlusswiderstandes kann das Harz dann aushärten, wodurch der elektrische Kontakt geschützt werden kann.

Gemäß einer weiteren Ausführungsform der Erfindung weist der Innenleiter eine zylindrische Aussparung zur Aufnahme des Abschlusswiderstandes auf.

Die Oberfläche der zylindrischen Aussparung (der Zylindermantel) kann eine Nut aufweisen, in welche der Dichtring eingreift, wenn die Abdichtungsvorrichtung in die Aussparung eingeschoben wird. Diese Nut kann darüber hinaus verhindern, dass die Abdichtungsvorrichtung unfreiwillig aus der Aussparung herausrutscht.

Gemäß einer weiteren Ausführungsform der Erfindung ist die Abdichtungsvorrichtung in den Innenleiter eingespritzt, so dass der Abschlusswiderstand also nach dessen Installation in den Innenleiter eingegossen wird.

Ein zusätzlicher Dichtring ist in diesem Falle nicht notwendig.

Gemäß einer weiteren Ausführungsform der Erfindung ist eine Abdeckung an dem unteren Ende der Sonde vorgesehen, welche den Abschlusswiderstand und den Außenleiter elektrisch miteinander verbindet.

Zur Klarstellung sei an dieser Stelle angemerkt, dass es sich bei dem Abschlusswiderstand um ein elektrisches Bauelement handeln kann, welches gemeinhin als Widerstand bezeichnet wird. Dieser Abschlusswiderstand bildet zusammen mit dem Federelement und der Abdeckung die elektrische Verbindung zwischen dem Innenleiter und dem Außenleiter aus.

Federelement, Abschlusswiderstand, Abdeckung und Abdichtungsvorrichtung können zusammengesetzt werden, bevor die Abdichtungsvorrichtung in die zylindrische Aussparung des Innenleiters eingeschoben wird. Daraufhin kann die Abdeckung an den Außenleiter aufgeklebt oder daran angeschweißt oder anderweitig leitend mit ihm verbunden werden.

Gemäß einer weiteren Ausführungsform der Erfindung ist die Abdeckung sternförmig ausgeführt. Auch ist es möglich, dass die Abdeckung in Form eines Lochblechs oder einer mit Löchern versehenen metallischen Platte ausgeführt ist.

Gemäß einer weiteren Ausführungsform der Erfindung weist der Innenleiter einen Grundkörper und ein vorderes Endstück auf, welches auf den Grundkörper des Innenleiters aufgesetzt ist und den Innenleiter somit verlängert, wobei der Abschlusswiderstand in das vordere Endstück des Innenleiters integriert ist.

In diesem Ausführungsbeispiel ist also ein Aufsatzteil vorgesehen, welches beispielsweise einen äußeren Rand aufweist, der über den Außenleiter geschoben werden kann. Bestehende Koaxialsonden können auf diese Weise nachgerüstet werden.

Gemäß einer weiteren Ausführungsform der Erfindung weist die Koaxialsonde einen einzigen Abschlusswiderstand auf, der auf der Längsachse des Innenleiters angeordnet ist. Weitere Widerstandselemente sind nicht vorgesehen.

Gemäß einer weiteren Ausführungsform der Erfindung weist die Koaxialsonde eine Schaltvorrichtung auf, mit Hilfe derer der Abschlusswiderstand zwischen den Innenleiter und den Außenleiter geschaltet werden kann bzw. mit Hilfe derer die elektrisch leitende Verbindung zwischen Innenleiter und Außenleiter über den Abschlusswiderstand unterbrochen werden kann.

Auch kann ein steuerbarer Widerstand vorgesehen sein, so dass der Wert des ohmschen Widerstandes der leitenden Verbindung zwischen Innenleiter und Außenleiter eingestellt werden kann, beispielsweise zwischen den Bereichen 40 Ohm und 60 Ohm oder zwischen den Bereichen 30 Ohm und 70 Ohm.

Gemäß einer weiteren Ausführungsform der Erfindung besteht der Grundkörper der Abdichtungsvorrichtung aus einem Elastomer, z.B. Fluorkautschuk (FKM) oder ein spritzbares thermoplastisches Elastomer (TPE).

Somit kann der Grundkörper mit speziellen Dichtbereichen ausgebildet sein, so dass auf ein weiteres Dichtelement, wie beispielsweise O-Ringe, verzichtet werden kann. Gleichzeitig könnte der innere Stift zur Kontaktierung der Abdeckung mit abgedichtet werden.

Gemäß einem weiteren Aspekt der Erfindung ist ein Zeitbereichsreflektometrie-Füllstandmessgerät mit einer oben und im Folgenden beschriebenen Koaxialsonde vorgesehen.

Im Folgenden werden mit Verweis auf die Figuren Ausführungsbeispiele der Erfindung beschrieben.

### Kurze Beschreibung der Figuren

Fig. 1 zeigt eine perspektivische Darstellung einer Koaxialsonde gemäß einem Ausführungsbeispiel der Erfindung.
Fig. 2 zeigt eine perspektivische Schnittdarstellung einer Koaxialsonde gemäß einem Ausführungsbeispiel der Erfindung.
Fig. 3 zeigt ein Füllstandmessgerät in einem Behälter gemäß einem Ausführungsbeispiel der Erfindung.
Fig. 4 zeigt eine Schnittdarstellung einer Koaxialsonde gemäß einem weiteren Ausführungsbeispiel der Erfindung.
Fig. 5 zeigt eine Abdeckung gemäß einem Ausführungsbeispiel der Erfindung.
Fig. 6 zeigt eine Abdeckung gemäß einem weiteren Ausführungsbeispiel der Erfindung.

Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

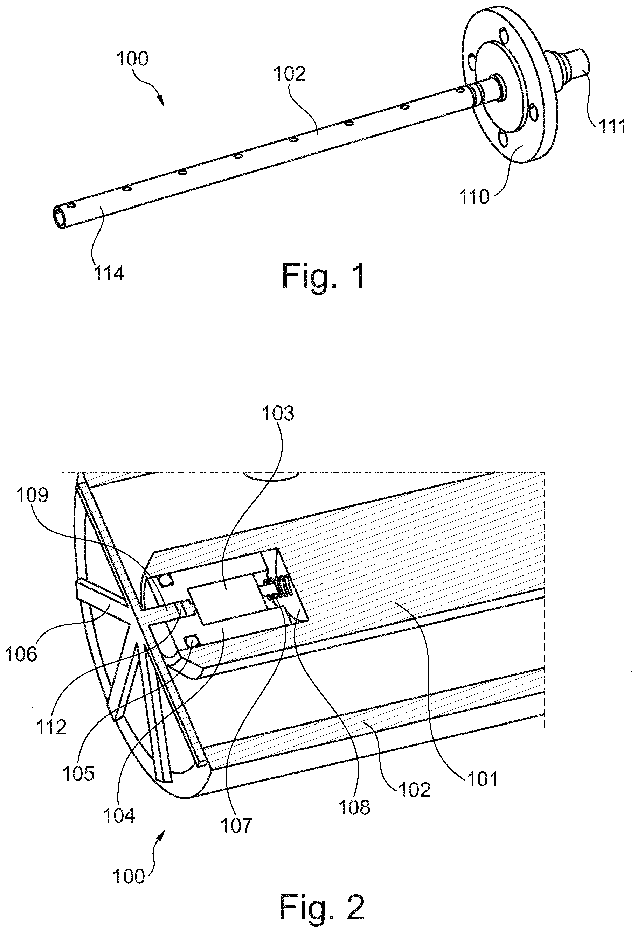

Fig. 1 zeigt eine perspektivische Darstellung einer Koaxialsonde für ein TDR-Füllstandmessgerät. Die Koaxialsonde 100 weist einen Flansch 110 am oberen Ende 111 des Außenleiters 102 auf, um die Sonde am Füllgutbehälter zu befestigen. Am oberen Ende 111 der Sonde befindet sich eine Schnittstelle zum Anschluss an die Elektronik des Füllstandmessgeräts.

Fig. 2 zeigt eine perspektivische Schnittdarstellung durch das untere Ende 114 (vgl. Fig. 1) der Sonde 100. Wie in Fig. 2 zu sehen ist, weist die Sonde einen Innenleiter 101 und einen koaxial angeordneten Außenleiter 102 auf.

Am unteren Ende des Innenleiters befindet sich eine Aussparung, die beispielsweise zylindrisch geformt ist und ebenfalls koaxial angeordnet ist. In diese Aussparung ist ein Abschlusswiderstand 103 eingesetzt, der in ein abdichtendes Material 104 eingebettet ist. Bei diesem Material handelt es sich beispielsweise um PFA oder einen anderen isolierenden Kunststoff.

An seinem oberen Ende ist der Abschlusswiderstand 103 über das Federelement 107 leitend mit dem Boden 108 der Aussparung im Innenleiter verbunden.

Zwischen dem Boden 108 der Aussparung, dem Widerstand 103 und der Abdichtung 104 befindet sich ein Hohlraum, der beispielsweise mit einem Harz ausgefüllt sein kann, welches nach Installation des Widerstandelementes 103 in den Innenleiter 101 aushärtet.

Am oberen Ende des Abschlusswiderstandes 103 befindet sich eine Zuleitung 109, die den Abschlusswiderstand 103 mit der sternförmigen Abdeckung 106 verbindet. In diese Zuleitung 109 kann ein Schaltelement 112 integriert sein, welche die leitfähige Verbindung zwischen dem Widerstand 103 und der Abdeckungsvorrichtung 106 wahlweise unterbrechen oder schließen kann. Dieses Schaltelement kann auch dazu ausgeführt sein, den Abschlusswiderstand 103 zu steuern, also seinen Widerstandswert zu ändern. Beispielsweise ist das Schaltelement mit einer Steuerung verbunden (nicht dargestellt).

Der Abschlusswiderstand 103 ist gegenüber der Umgebung der Koaxialsonde komplett abgedichtet, so dass er nicht mit dem Füllmedium bzw. der Messumgebung der Sonde in Kontakt kommen kann. Zusätzlich kann ein O-Ring 105 vorgesehen sein, der die Abdichtung zwischen dem Grundkörper 104 und dem Innenleiter 101 weiter erhöht.

Durch den Abschlusswiderstand können beispielsweise Überschwinger am Sondenende, die bei der Messung auftreten können, vermieden werden. Somit sind gute Messergebnisse für Füllstände im Bereich des Sondenendes erzielbar.

Durch die sternförmige Abdeckung 106, welche beispielsweise sechs oder acht sternförmig angeordnete Arme aufweist, kann eine symmetrische Verteilung des elektromagnetischen Feldes erzielt werden. Die sternförmige Abdeckung ist hierbei sowohl leitend mit dem Abschlusswiderstand 103 als auch mit dem Außenleiter 102 verbunden. Diese Verbindung kann beispielsweise über eine Verklebung oder Verschweißung erfolgen. Auch ist eine Verklemmung möglich.

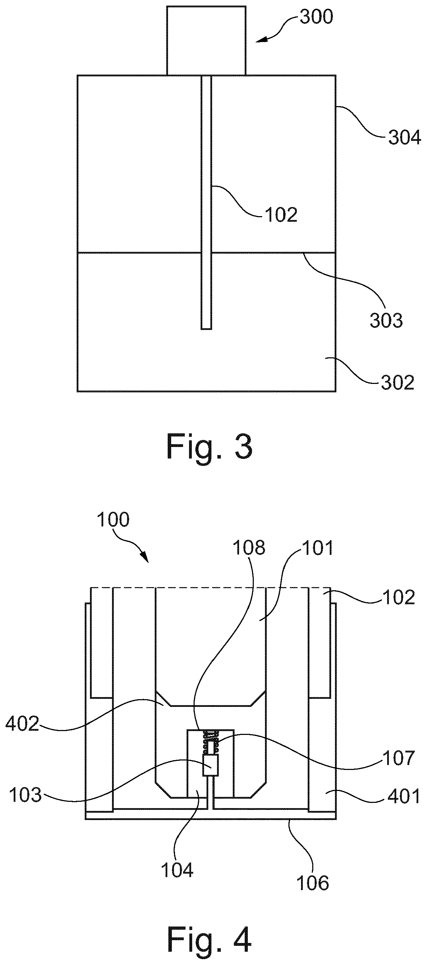

Fig. 3 zeigt einen Behälter 304, an dem ein TDR-Füllstandmessgerät 300 angebracht ist. Die Koaxialsonde des Messgeräts taucht in das Füllgut 302 ein, so dass sich das untere Ende der Koaxialsonde unterhalb der Füllgutoberfläche 303 befindet.

Fig. 4 zeigt eine Schnittdarstellung des unteren Endes einer Koaxialsonde 100 gemäß einem weiteren Ausführungsbeispiel der Erfindung. In diesem Ausführungsbeispiel ist das untere Ende der Koaxialsonde 100 zweigeteilt. Der zweite, untere Teil kann auf den oberen Teil aufgesetzt werden. Es handelt sich also um eine Art modulare Sondenverlängerung, welche den Abschlusswiderstand 103 aufweist.

Der Abschlusswiderstand 103 ist nicht in den Hauptinnenleiter 101 integriert, sondern in dem Anschlussstück 402, welches an den Hauptinnenleiter 101 angeschlossen wird, indem die Verlängerung auf das Ende der ursprünglichen Koaxialsonde aufgesetzt wird.

Beispielsweise ist der Außenleiter 401 des Aufsatzstückes so ausgebildet, dass er zwei verschiedene Innendurchmesser aufweist. Im unteren Bereich stimmt der Innendurchmesser des Aufsatzstückes mit dem Innendurchmesser des ursprünglichen Außenleiters 102 überein. Im oberen Bereich allerdings stimmt der Innendurchmesser des Aufsatzstückes mit dem Außendurchmesser des ursprünglichen Innenleiters 102 überein, so dass das Aufsatzstück in diesem Bereich über den Außenleiter 102 geschoben oder geschraubt werden kann.

In der aufgeschobenen (oder aufgeschraubten) Position kann es dann im einfachsten Falle über eine Rohrschelle befestigt werden. Wird es durch Drehbewegung aufgeschraubt, weist die Außenseite des Außenleiters 102 ein Außengewinde und die Innenseite des oberen Bereiches des Aufsatzstückes ein entsprechendes Innengewinde auf. Alternativ ist auch ein Verkleben oder Verschweißen von Sonde und Aufsatzstück möglich.

Der Abschlusswiderstand 103 ist in das Innenleiteranschlussstück 402 auf dieselbe Weise eingebettet, wie dies weiter oben beschrieben ist.

Wie im Ausführungsbeispiel der Fig. 4 zu erkennen ist, ist es nicht erforderlich, dass ein Hohlraum zwischen dem Abschlusswiderstand 103 und dem Boden 108 der Aussparung vorgesehen ist. Ein solcher Hohlraum kann beispielsweise dann entfallen, wenn der Widerstand nach dessen Installation in die Aussparung eingegossen wird.

Die Verbindung zwischen dem Außenleiter 102 und dem Außenleiteranschlussstück 401 kann luftdicht ausgeführt sein. Insbesondere kann der in Fig. 4 gezeigte Aufsatz nachträglich an eine bereits bestehende Koaxialsonde montiert werden.

Zusammenfassend ist festzustellen, dass ein einzelner zentraler Widerstand 103 in der Mitte der Koaxialsonde (in Querrichtung) und am unteren Ende der Sonde (in Längsrichtung) die Aufgabe mehrerer parallel geschalteter Widerstände am Sondenende übernehmen kann. Mit einem Stern oder einer entsprechenden leitenden elektrischen Verbindung zum Außenleiter kann die symmetrische Verteilung des elektromagnetischen Feldes gewährleistet werden.

Durch den Einbau einer solchen "Widerstandseinheit" in den Innenleiter der TDR-Sonde kann diese vom zu messenden Medium abgedichtet werden.

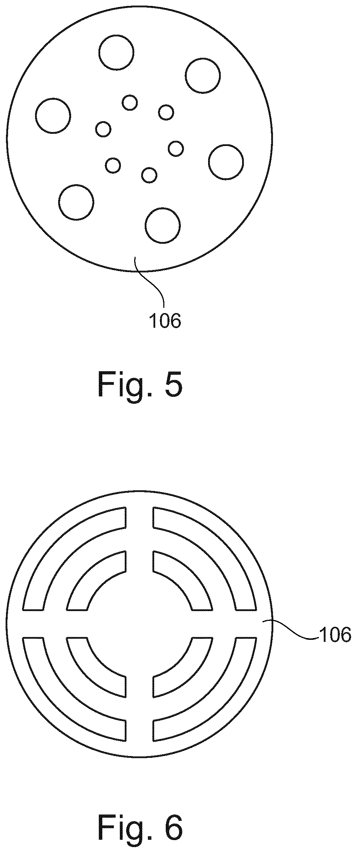

Fig. 5 zeigt eine Alternative zu der sternförmigen Abdeckung 106 der Fig. 2. Im Ausführungsbeispiel der Fig. 5 ist die Abdeckung in Form einer metallischen Platte ausgeführt, die mehrere Löcher aufweist, durch welche das Füllfluid treten kann. Beispielsweise sind zwei Gruppen von Löchern vorgesehen, wobei die erste Gruppe einen kleineren Durchmesser aufweist als die zweite Gruppe und wobei beide Gruppen auf jeweils einem von zwei konzentrisch angeordneten Kreisringen angeordnet sind.

Fig. 6 zeigt ein weiteres Ausführungsbeispiel für eine Abdeckung 106, welche mehrere schlitzförmige Aussparungen aufweist, die auf zwei konzentrischen Kreisringen liegen.

## Patentansprüche

1. Koaxialsonde für ein Zeitbereichsreflektometrie-Füllstandmessgerät, die Sonde (100) aufweisend:
einen Innenleiter (101, 402);
einen Außenleiter (102);
einen Abschlusswiderstand (103), über den der Innenleiter mit dem Außenleiter elektrisch verbunden ist;
wobei sich der Abschlusswiderstand an einem unteren Ende des Innenleiters befindet;
**dadurch gekennzeichnet, dass** der Abschlusswiderstand in den Innenleiter integriert ist und dass die Sonde ein Federelement (107) aufweist, das zwischen dem Abschlusswiderstand (103) und dem Innenleiter (101, 402) angeordnet ist und den Abschlusswiderstand (103) mit dem Innenleiter elektrische verbindet.

2. Koaxialsonde nach Anspruch 1, weiter aufweisend:
eine Abdichtungsvorrichtung (104, 105) zum Verhindern eines Fluidaustausches zwischen einer Umgebung (301, 302) der Sonde (100) und dem Abschlusswiderstand (103).

3. Koaxialsonde nach Anspruch 2,
wobei die Abdichtungsvorrichtung (104, 105) einen Grundkörper (104) aufweist, in den der Abschlusswiderstand (103) eingebettet ist und der sich in einer Aussparung in einem dem zu vermessenden Füllgut zuzuwendenden Ende des Innenleiters (101, 402) befindet.

4. Koaxialsonde nach Anspruch 3,
wobei die Abdichtungsvorrichtung (104, 105) einen Dichtring (105) aufweist, der zumindest teilweise in den Grundkörper (104) eingebettet ist und welcher der Abdichtung zwischen dem Grundkörper (104) und dem Innenleiter (101, 402) dient.

5. Koaxialsonde nach einem der Ansprüche 2 bis 4,
wobei der Grundkörper (104) der Abdichtungsvorrichtung (104, 105) aus spritzgussfähigem Kunststoff besteht.

6. Koaxialsonde nach einem der vorhergehenden Ansprüche,
wobei der Innenleiter (101, 402) eine zylindrische Aussparung zur Aufnahme des Abschlusswiderstands (103) aufweist.

7. Koaxialsonde nach Anspruch 6,
wobei die Oberfläche der zylindrischen Aussparung eine Nut aufweist, in welche der Dichtring (105) eingreift, wenn die Abdichtungsvorrichtung (104, 105) in die Aussparung eingeschoben wird.

8. Koaxialsonde nach einem der vorhergehenden Ansprüche,
wobei die Abdichtungsvorrichtung (104) in den Innenleiter (101, 402) eingespritzt ist.

9. Koaxialsonde nach einem der vorhergehenden Ansprüche, weiter aufweisend:
eine Abdeckung (106) an einem dem zu vermessenden Füllgut zuzuwendenden Ende der Sonde, welche den Abschlusswiderstand (103) und den Außenleiter (102) elektrisch miteinander verbindet.

10. Koaxialsonde nach Anspruch 9,
wobei die Abdeckung (106) sternförmig ausgeführt ist.

11. Koaxialsonde nach einem der vorhergehenden Ansprüche,
wobei der Innenleiter (101, 402) einen Grundkörper (101) und ein vorderes Endstück (402) aufweist, welches auf den Grundkörper (101) des Innenleiters aufgesetzt ist und den Innenleiter (101) somit verlängert;
wobei der Abschlusswiderstand (103) in das vordere Endstück (402) des Innenleiters (101, 402) integriert ist.

12. Koaxialsonde nach einem der vorhergehenden Ansprüche, wobei ein einziger Abschlusswiderstand (103) vorgesehen ist, der auf der Längsachse des Innenleiters (101, 402) angeordnet ist.

13. Koaxialsonde nach einem der vorhergehenden Ansprüche, weiter aufweisend:
eine Schaltvorrichtung (112) zum wahlweisen Zuschalten des Abschlusswiderstands (103) zwischen Innenleiter (101, 402) und Außenleiter (102).

14. Koaxialsonde nach einem der Ansprüche 3 oder 4,
wobei der Grundkörper (104) der Abdichtungsvorrichtung aus einem Elastomer besteht.

15. Zeitbereichsreflektometrie-Füllstandmessgerät (300) mit einer Koaxialsonde (100) nach einem der vorhergehenden Ansprüche.

## Claims

1. Coaxial probe for a time-domain reflectometry fill-level measuring instrument, the probe (100) comprising:
an inner conductor (101, 402);
an outer conductor (102);
a terminating resistor (103) via which the inner conductor is electrically coupled to the outer conductor;
wherein the terminating resistor is located at a lower end of the inner conductor; **characterized in that**,
the terminating resistor is integrated into the inner conductor and **in that** the probe comprises a spring element (107), which is arranged between the terminating resistor (103) and the inner conductor (101, 402) and electrically couples the terminating resistor (103) with the inner conductor.

2. Coaxial probe according to claim 1, further comprising:
a sealing device (104, 105) preventing exchange of fluid between an environment (301, 302) of the probe (100) and the terminating resistor (103).

3. Coaxial probe according to claim 2,
wherein the sealing device (104, 105) comprises a main body (104) in which the terminating resistor (103) is embedded and which is located in a recess at an end of the inner conductor (101, 402) which is to be faced towards the filling material that is to be measured.

4. Coaxial probe according to claim 3,
wherein the sealing device (104, 105) comprises a sealing ring (105) which is at least partly embedded in the main body (104) at least in part and which serves for providing a seal between the main body (104) and the inner conductor (101, 402).

5. Coaxial probe according to any of claims 2 to 4,
wherein the main body (104) of the sealing device (104, 105) is composed of mouldable plastics material.

6. Coaxial probe according to any of the preceding claims,
wherein the inner conductor (101, 402) comprises a cylindrical recess for receiving the terminating resistor (103).

7. Coaxial probe according to claim 6,
wherein the surface of the cylindrical recess comprises a groove in which the sealing ring (105) engages when the sealing device (104, 105) is inserted into the recess.

8. Coaxial probe according to any of the preceding claims,
wherein the sealing device (104) is injection molded into the inner conductor (101,402).

9. Coaxial probe according to any of the preceding claims, further comprising:
a cover (106) at an end of the probe to be faced towards the filling material that is to be measured, which cover electrically couples the terminating resistor (103) and the outer conductor (102).

10. Coaxial probe according to claim 9,
wherein the cover (106) is star-shaped.

11. Coaxial probe according to any of the preceding claims,
wherein the inner conductor (101, 402) comprises a main body (101) and a front end piece (402) which is arranged on the main body (101) of the inner conductor and thereby extends the inner conductor,
wherein the terminating resistor (103) is integrated into the front end piece (402) of the inner conductor (101, 402).

12. Coaxial probe according to any of the preceding claims,
wherein a single terminating resistor (103) is provided, which is arranged on the longitudinal axis of the inner conductor (101, 402).

13. Coaxial probe according to any of the preceding claims, further comprising:
a switching device (112) for selectively connecting the terminating resistor (103) between the inner conductor (101, 402) and the outer conductor (102).

14. Coaxial probe according to any of claims 3 or 4,
wherein the main body (104) of the sealing device is composed of an elastomer.

15. Time-domain reflectometry fill-level measuring instrument (300) with a coaxial probe (100) according to any of the preceding claims.

## Revendications

1. Sonde coaxiale pour un appareil de mesure de niveau de remplissage par réflectométrie dans le domaine temporel, la sonde (100) comportant :
un conducteur intérieur (101, 402),
un conducteur extérieur (102),
une résistance de terminaison (103) par l'intermédiaire de laquelle le conducteur intérieur est électriquement relié au conducteur extérieur,
dans laquelle la résistance de terminaison se situe à une extrémité inférieure du conducteur intérieur,
**caractérisée en ce que** la résistance de terminaison est intégrée dans le conducteur intérieur et **en ce que** la sonde comporte un élément à ressort (107) agencé entre la résistance de terminaison (103) et le conducteur intérieur (101, 402) et reliant électriquement la résistance de terminaison (103) au conducteur intérieur.

2. Sonde coaxiale selon la revendication 1, comportant en outre :
un dispositif d'étanchéité (104, 105) pour empêcher un échange de fluide entre un environnement (301, 302) de la sonde (100) et la résistance de terminaison (103).

3. Sonde coaxiale selon la revendication 2,
dans laquelle le dispositif d'étanchéité (104, 105) comporte un corps principal (104) dans lequel la résistance de terminaison (103) est incorporée et qui se situe dans un évidement dans une extrémité du conducteur intérieur (101, 402) qui doit être tournée vers le matériau de remplissage à mesurer.

4. Sonde coaxiale selon la revendication 3,
dans laquelle le dispositif d'étanchéité (104, 105) comporte une bague d'étanchéité (105) qui est incorporée au moins partiellement dans le corps principal (104) et qui sert à réaliser l'étanchéité entre le corps principal (104) et le conducteur intérieur (101, 402).

5. Sonde coaxiale selon l'une des revendications 2 à 4,
dans laquelle le corps principal (104) du dispositif d'étanchéité (104, 105) est constitué d'une matière plastique moulable par injection.

6. Sonde coaxiale selon l'une des revendications précédentes,
dans laquelle le conducteur intérieur (101, 402) comporte un évidement cylindrique pour recevoir la résistance de terminaison (103).

7. Sonde coaxiale selon la revendication 6,
dans laquelle la surface de l'évidement cylindrique comporte une rainure dans laquelle la bague d'étanchéité (105) s'engage lorsque le dispositif d'étanchéité (104, 105) est inséré dans l'évidement.

8. Sonde coaxiale selon l'une des revendications précédentes,
dans laquelle le dispositif d'étanchéité (104) est injecté dans le conducteur intérieur (101, 402).

9. Sonde coaxiale selon l'une des revendications précédentes, comportant en outre :
un élément de recouvrement (106) sur une extrémité de la sonde devant être tournée vers le matériau de remplissage à mesurer, laquelle extrémité relie électriquement l'un à l'autre la résistance de terminaison (103) et le conducteur extérieur (102).

10. Sonde coaxiale selon la revendication 9,
dans laquelle l'élément de recouvrement (106) est réalisé en forme d'étoile.

11. Sonde coaxiale selon l'une des revendications précédentes,
dans laquelle le conducteur intérieur (101, 402) comporte un corps principal (101) et une pièce d'extrémité avant (402) placée sur le corps principal (101) du conducteur intérieur et prolongeant ainsi le conducteur intérieur (101),
dans laquelle la résistance de terminaison (103) est intégrée dans la pièce d'extrémité avant (402) du conducteur intérieur (101, 402).

12. Sonde coaxiale selon l'une des revendications précédentes, dans laquelle est prévue une seule résistance de terminaison (103) qui est agencée sur l'axe longitudinal du conducteur intérieur (101, 402).

13. Sonde coaxiale selon l'une des revendications précédentes, comportant en outre :
un dispositif de commutation (112) pour commuter sélectivement la résistance de terminaison (103) entre le conducteur intérieur (101, 402) et le conducteur extérieur (102).

14. Sonde coaxiale selon l'une des revendications 3 ou 4,
dans laquelle le corps principal (104) du dispositif d'étanchéité est constitué d'un élastomère.

15. Appareil de mesure de niveau de remplissage par réflectométrie dans le domaine temporel (300) avec une sonde coaxiale (100) selon l'une des revendications précédentes.
